# FASCICULE DE BREVET EUROPEEN

(11) **EP 0 911 575 B1**
(45) Date de publication et mention de la délivrance du brevet: **28.02.2007**
(21) Numéro de dépôt: 98402603.9
(22) Date de dépôt: 20.10.1998
(51) Int. Cl.: F21S 8/10, F21V 23/06

(54) **Dispositif d'éclairage ou de signalisation comportant un porte-contacts pour sa connexion à un véhicule**
Beleuchtungs- oder Signalvorrichtung mit einem Stecker zum Anschluss an ein Fahrzeug
Lighting or signalling device comprising a plug for connection to a vehicle

(30) Priorité: 22.10.1997 FR 9713220
(43) Date de publication de la demande: 28.04.1999
(73) Titulaire: VALEO VISION, 93000 Bobigny (FR)
(72) Inventeur: Josquin, Daniel, 77290 Mitry Mory (FR)
(74) Mandataire: Renous Chan, Véronique

(56) Documents cités:
- DE-A- 4 418 399
- FR-A- 2 723 893
- US-A- 5 033 976

## Description

La présente invention concerne les dispositifs d'éclairage ou de signalisation pour véhicule.

On connaît d'après le document FR-A-2 468 115 un projecteur pour véhicule comportant un socle présentant un orifice fermé par un bouchon. Le bouchon porte des lames de contact le traversant et s'étendant à l'extérieur du projecteur pour être connectées directement à un connecteur du véhicule. Le bouchon est fixé au socle par un système à baïonnette comprenant des ergots et des encoches. La fixation des lames de contact sur le projecteur requiert donc un grand nombre de pièces, nécessite un montage compliqué sur chaîne, et entraîne un prix de revient élevé.

Le document FR-2 723 893 présente un dispositif d'éclairage pour véhicule comportant un porte-contacts apte à être connecté directement à un connecteur du véhicule et présentant un conduit apte à recevoir le porte-contacts en vue de sa connexion. Le document US-5,033,976 décrit un connecteur avec un système de blocage des contacts électriques.

Un but de l'invention est de fournir un dispositif d'éclairage ou de signalisation pour véhicule d'un type différent et dans lequel la fixation et le positionnement des contacts soient simplifiés, plus rapides et moins coûteux.

En vue de la réalisation de ce but, on prévoit selon l'invention un dispositif d'éclairage ou de signalisation pour véhicule selon la revendication 1.

Ainsi, le conduit contribue au support et au positionnement du porte-contacts sur le dispositif. Le montage du porte-contacts sur le dispositif d'éclairage ou de signalisation est donc simple et rapide à effectuer sur chaîne, il nécessite peu de pièces et le prix de revient du dispositif est réduit. De plus, le verrou interdit la sortie intempestive du contact reçu en position de contact.

Avantageusement, le dispositif comporte un socle définissant le conduit.

Ainsi, on réduit le nombre de pièces différentes à fabriquer et à monter. Le conduit est par exemple venu de moulage avec le socle.

Avantageusement, le dispositif comporte un socle et une embase rapportée sur le socle et définissant le conduit.

Ainsi, alternativement, le socle et l'embase sont très faciles à fabriquer séparément.

Avantageusement, le conduit présente une longueur supérieure à une épaisseur du socle mesurée à distance du conduit.

Ainsi, le conduit assure un positionnement et une fixation particulièrement efficaces du porte-contacts.

Avantageusement, le conduit est adapté pour recevoir le porte-contacts de façon ajustée.

Ainsi, on réduit les risques de déformation du porte-contacts.

Avantageusement, le dispositif comporte des moyens de butée pour limiter une avancée du porte-contacts dans le conduit jusqu'à une position de réception.

On définit ainsi précisément la position de réception, ce qui facilite l'assemblage sur chaîne.

Avantageusement, le dispositif comporte des moyens de clipsage adaptés à interdire une sortie intempestive du porte-contacts une fois celui-ci reçu dans le conduit.

Ainsi, on évite la sortie du porte-contacts, par exemple sous l'effet de la gravité ou des vibrations dues au roulement du véhicule.

Avantageusement, le porte-contacts présente une extrémité de connexion adaptée à coopérer avec le connecteur du véhicule, le conduit étant adapté à s'étendre au-delà de l'extrémité de connexion lorsque le porte-contacts est reçu en position de réception.

Ainsi, le conduit peut recevoir en outre le connecteur du véhicule et contribuer à son positionnement et à sa fixation. L'opération de connexion du dispositif d'éclairage ou de signalisation au véhicule est donc facilitée.

Avantageusement, chaque verrou est articulé sur le support.

On évite ainsi une opération d'assemblage.

Avantageusement, chaque contact et le verrou associé sont configurés de sorte que le contact, dans toute position dans le support autre que la position de contact, occupe l'emplacement du verrou en position de verrouillage.

Ainsi, la fermeture du verrou garantit le bon positionnement du contact associé dans le porte-contacts.

Avantageusement, le conduit est adapté à recevoir les verrous.

Ainsi, la réception du porte-contacts dans le conduit garantit que les verrous sont fermés, et le cas échéant, que les contacts sont convenablement positionnés. De plus, les verrous sont protégés mécaniquement à l'intérieur du conduit et on évite leur ouverture intempestive.

On prévoit également selon l'invention un ensemble pour l'assemblage d'un dispositif d'éclairage ou de signalisation pour véhicule selon la revendication 12.

Ainsi, le même porte-contacts peut être reçu à volonté dans le conduit du socle ou le conduit de l'embase rapportée sur le socle. La standardisation du porte-contacts permet de réduire les coûts et de simplifier la gestion des stocks lorsque les deux modes de réalisation sont simultanément exploités.

D'autres caractéristiques et avantages de l'invention apparaîtront encore dans la description suivante d'un mode préféré de réalisation donné à titre d'exemple non limitatif. Aux dessins annexés :
- la figure 1 est une vue de principe en coupe axiale d'un projecteur selon l'invention ;
- la figure 2 est une vue de principe en perspective du porte-contacts, du conduit et du connecteur du véhicule illustrant la connexion du projecteur de la figure 1 au véhicule ;
- la figure 3 est une vue en coupe axiale de principe du porte-contacts et du conduit de la figure 2 ;
- la figure 4 est une vue en coupe axiale de principe du porte-contacts de la figure 2 montrant le verrou en position déverrouillée ;
- les figures 5 à 10 sont des vues respectivement de dessus, en coupe axiale horizontale, en coupe axiale verticale, de gauche, de droite et de dessous d'un premier exemple de réalisation du conduit recevant le porte-contacts ; et
- les figures 11 à 15 sont des vues respectivement de dessus, en coupe axiale horizontale, en coupe axiale verticale, de gauche et de droite d'un deuxième exemple de réalisation du conduit recevant le porte-contacts.

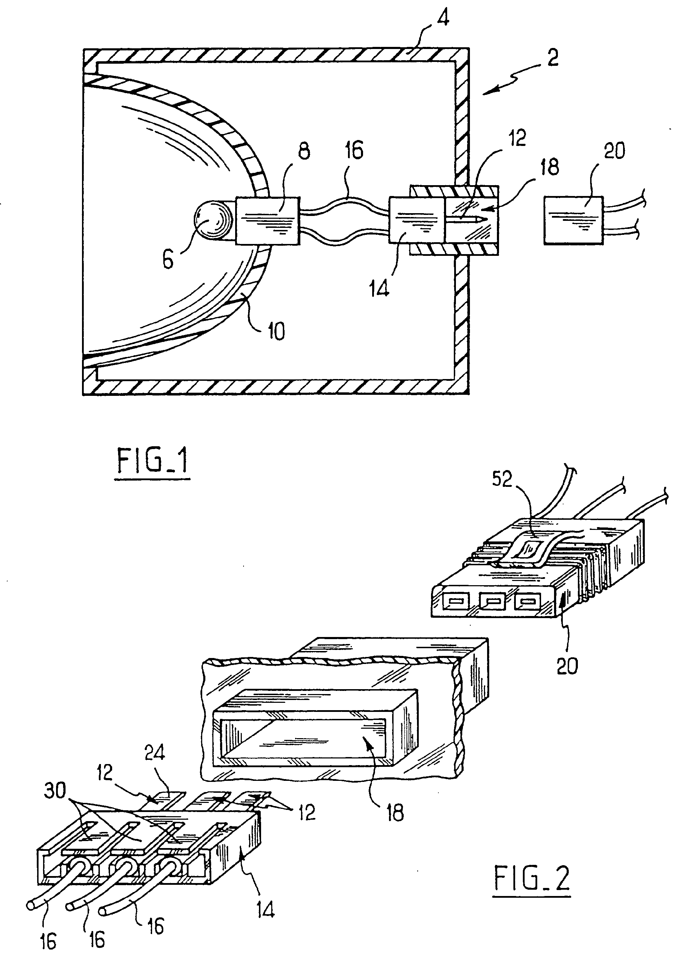

En référence aux figures 1 à 4, le projecteur 2 comporte un socle 4, une lampe 6, un porte-lampe 8 et un réflecteur 10. Le socle 4 supporte le réflecteur 10. Ce dernier supporte le porte-lampe 8. Le projecteur 2 est adapté à être fixé sur un véhicule automobile par l'intermédiaire du socle 4 de façon connue en soi.

Le projecteur comporte des contacts métalliques 12, par exemple au nombre de trois, et un porte-contacts 14 recevant ces derniers. Chaque contact 12 reçoit une extrémité dénudée d'un fil 16 dont une autre extrémité est connectée par exemple au porte-lampe 8 ou à un correcteur d'inclinaison du projecteur, et ce par exemple par l'intermédiaire d'un autre contact.

Le projecteur 2 présente un conduit 18 ici de forme profilée à section de forme générale rectangulaire, traversant une ouverture d'une paroi arrière du socle 4 et mettant ainsi en communication l'extérieur et l'intérieur du projecteur. Le porte-contacts 14 est adapté à être reçu dans le conduit 18 pour y être supporté et positionné, et ce afin d'être connecté directement à un connecteur 20 du véhicule. Le conduit 18 présente une longueur l, mesurée suivant la direction d'introduction du porte-contacts 14 dans le conduit, très supérieure à une épaisseur e du socle 4 mesurée parallèlement à cette longueur l, à distance du conduit. Par exemple, la longueur du conduit 18 est vingt fois supérieure à l'épaisseur e du socle 4.

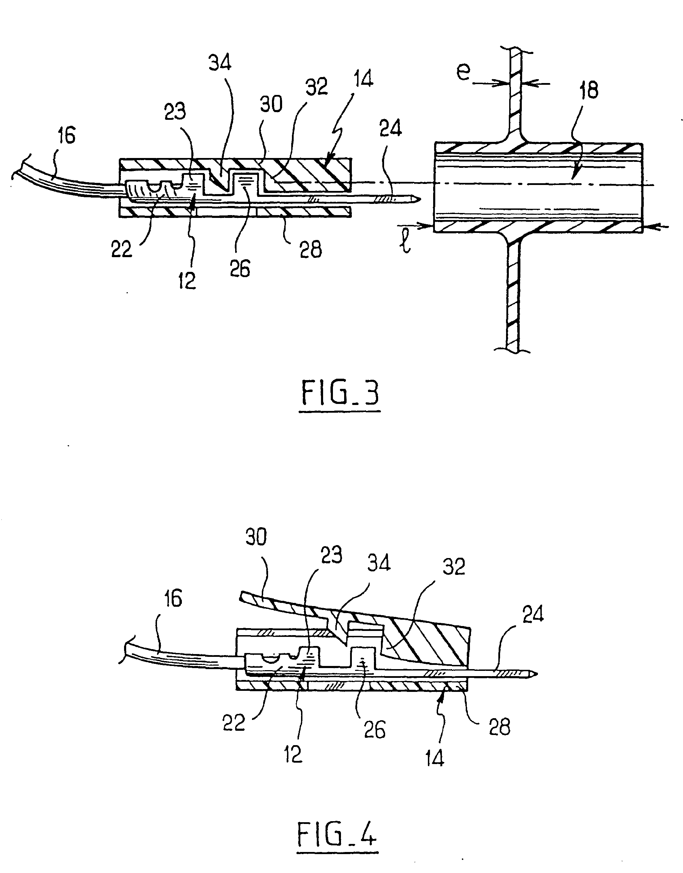

En référence aux figures 3 et 4, chaque contact 12 est réalisé d'un seul tenant en une feuille métallique pliée. Il comporte une patte de fixation 23 repliée ou enroulée autour de l'extrémité dénudée du fil 16, et opposée à cette patte, une lame 24 de forme générale plate allongée. Il comporte en outre une patte de butée 26 également repliée ou enroulée, et s'étendant à distance de la patte de fixation 23, entre celle-ci et la lame 24. Les deux pattes 23, 26 donnent ainsi localement au contact 12 un profil en "U" en vue de côté, comme sur les figure 3 et 4. Le porte-contacts 14 comporte un support 28 présentant une base généralement plate adaptée à recevoir les contacts 12 avec les deux pattes 23, 26 s'étendant du côté opposé à la base. Le support 28 présente une extrémité arrière permettant l'introduction des contacts 12 et une extrémité avant présentant des orifices autorisant respectivement le passage de la lame 24 du contact associé.

Le porte-contacts 14 comporte des verrous 30, par exemple au nombre de trois, articulés à l'extrémité avant du support 28. Les verrous sont d'une seule pièce avec le support, le porte-contacts étant en matière plastique. Chaque verrou 30 comprend un relief avant 32 constituant une butée pour la patte de butée 26 du contact 12, et limitant son avancée lors de l'introduction du contact dans le support. Chaque verrou 30 comprend également une saillie 34 s'étendant en direction de la base et adaptée à s'insérer entre la patte de fixation 23 et la patte de butée 26 du contact et formant ainsi obstacle au recul de la patte de butée 26.

Le verrou 30 est adapté à avoir une position de verrouillage représentée en figure 3 dans laquelle le verrou s'étend parallèlement à la base et interdit la sortie du contact 12 reçu dans le porte-contacts 14. Le contact 12 occupe alors une position que nous appellerons la position de contact. La patte de butée 26 est en butée vers l'avant contre le relief avant 32 du verrou et la lame 24 s'étend à l'extérieur du support. La saillie 34 du verrou s'étend alors entre les deux pattes 23, 26 du contact.

Le verrou 30 est adapté à avoir une position de déverrouillage représentée en figure 4 dans laquelle il autorise l'installation (et le retrait) du contact 12 dans le support 28. Le verrou 30 est alors écarté de la base et forme un angle avec celle-ci. Lorsque le contact 12 est reçu dans le support, le verrou 30 ne peut être fermé que si le contact occupe la position de contact précitée. Dans les autres positions, soit la lame 24 ne fait pas saillie hors du porte-contacts 14, soit la saillie 34 du verrou vient en butée contre la patte 26 du contact. Dans les deux cas, le contact 12 interdit la fermeture du verrou 30. La fermeture du verrou garantit donc le bon positionnement du contact dans le support. Des moyens de fixation du verrou 30 par clipsage au support en position de verrouillage peuvent être prévus.

Les verrous 30 sont adaptés à être reçus dans le conduit 18 avec le porte-contacts 14. Lorsque tous les verrous 30 sont fermés, le porte-contacts a une forme générale profilée à section de forme générale rectangulaire sensiblement de même forme et dimensions que la section du conduit 18. Le porte-contacts 14 et le conduit 18 sont dimensionnés de sorte que le porte-contacts peut alors être reçu dans le conduit 18 pratiquement sans jeu, par exemple avec un ajustement glissant ou serré. Lorsqu'un verrou 30 n'est pas en position de verrouillage, la hauteur anormale du porte-contacts 14 interdit de le disposer en position de réception dans le conduit.

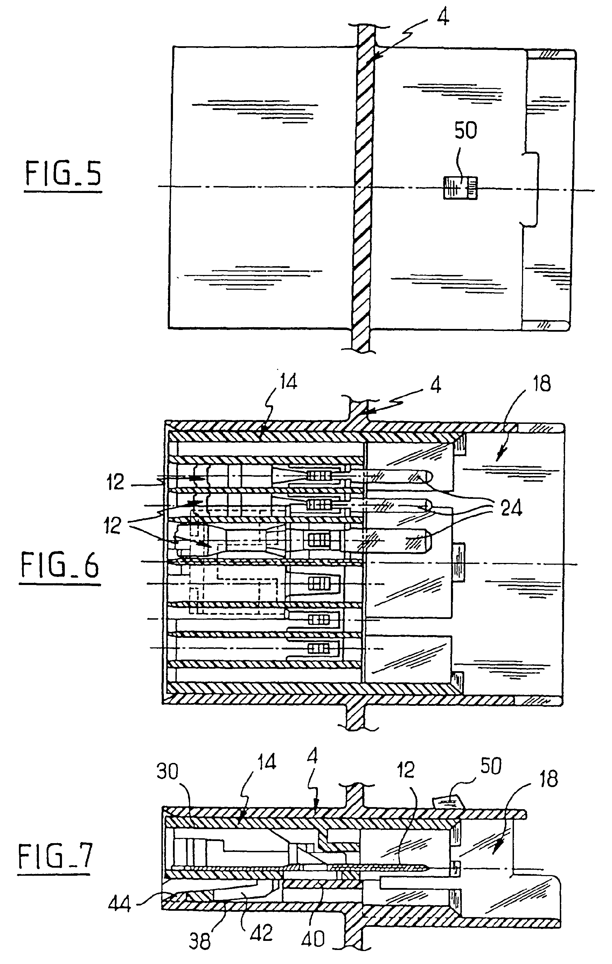

On va maintenant décrire d'autres caractéristiques du porte-contacts et du conduit en référence aux figures 5 à 10 présentant un premier exemple de réalisation du conduit.

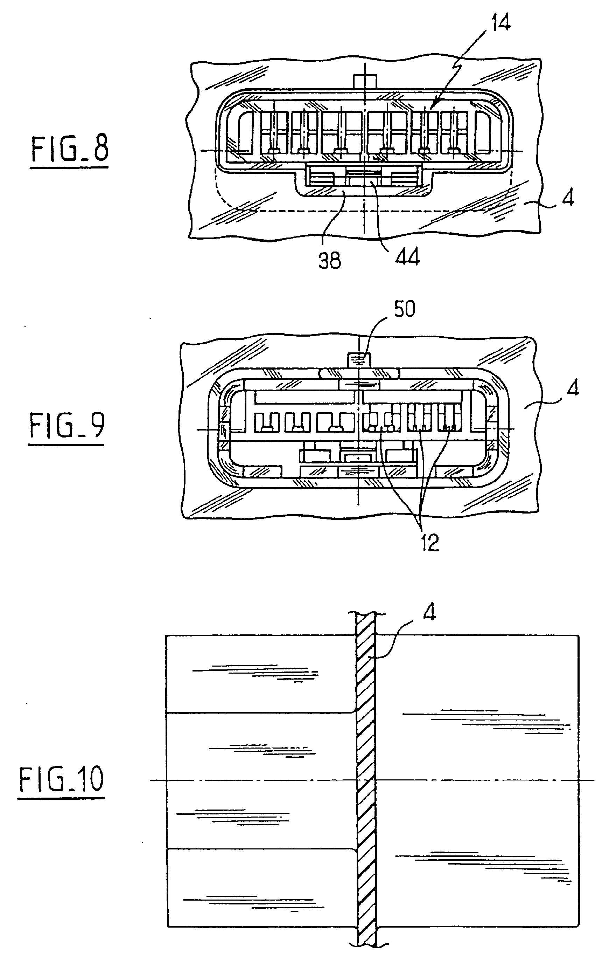

En référence aux figures 8 et 10, une face inférieure 38 du conduit 18 a un profil en "U" de façon à définir un décrochement vers le bas le long du centre de cette face 38. Le porte-contacts 14 a une face inférieure de même profil et est adapté à être inséré dans le conduit 18 jusqu'à occuper la position de réception, en vue de sa connexion au connecteur 20 du véhicule. Dans cette position, l'extrémité arrière du porte-contacts 14 affleure l'extrémité arrière du conduit 18. De plus, le conduit 18 a une longueur supérieure à celle du porte-contacts 14 de sorte qu'il s'étend alors au-delà de l'extrémité avant du porte-contacts et des lames 24. En référence à la figure 7, la position de réception est définie au moyen d'un relief 40 du conduit 18 tel qu'une marche s'étendant en saillie du décrochement de la face inférieure 38 du conduit 18, et au moyen d'un relief 42 du porte-contacts 14, tel qu'un bras de la face inférieure du porte-contacts 14 s'étendant en saillie vers le bas. La marche 40 et le bras 42 sont configurés de sorte que, lors de l'insertion du porte-contacts 14 dans le conduit 18, la mise en butée du bras 42 contre la marche 40 signale l'arrivée du porte-contacts 14 dans la position de réception et la fin de la course de celui-ci.

En outre, la face inférieure 38 du conduit 18 comprend une butée 44 à l'extrémité arrière du conduit, le bras 42 étant adapté à se fléchir élastiquement en direction du porte-contacts 14 au passage de cette butée 44. Arrivé en position de réception, le bras 42 se déploie élastiquement vers le bas. La butée 44 interdit alors le recul du bras 42 et donc la sortie du porte-contacts 14. On obtient ainsi le blocage du porte-contacts par clipsage.

La partie du conduit 18 s'étendant à l'avant du porte-contacts 14 est adaptée à recevoir le connecteur 20 du véhicule pour sa connexion au porte-contacts 14 à l'intérieur du conduit. A cette fin, la partie avant du conduit peut avoir une section transversale de plus grandes dimensions que la partie arrière du conduit. En référence aux figures 2 et 7, une paroi supérieure du conduit présente sur une face externe un ergot 50 adapté à coopérer avec une patte supérieure externe 52 du connecteur 20 du véhicule pour la fixation de ce dernier au conduit 18 par clipsage.

Dans le premier exemple de réalisation des figures 5 à 10, le conduit 18 est défini directement par le socle 4 et est venu de moulage avec celui-ci.

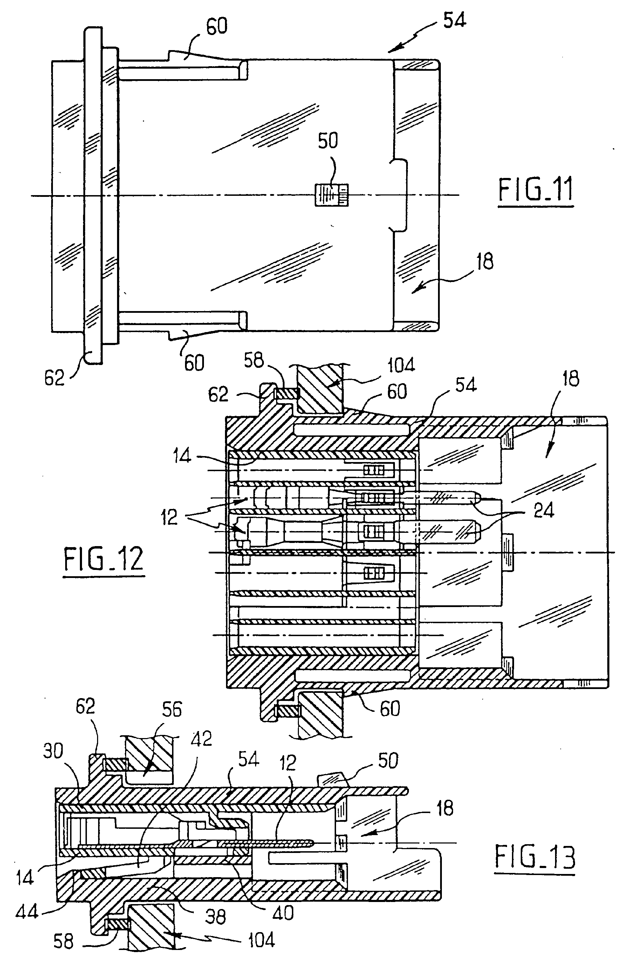

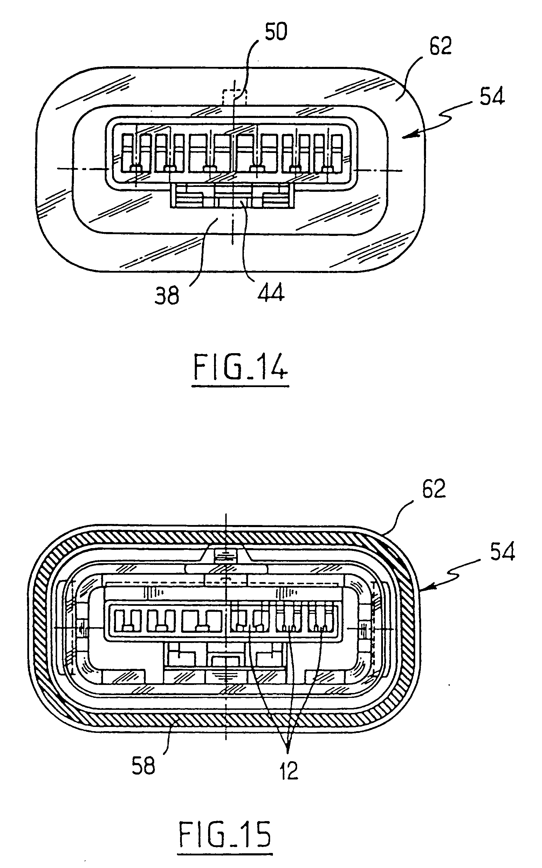

Dans le deuxième exemple de réalisation des figures 11 à 15, le projecteur 2 comporte une embase 54 définissant le conduit 18 et rapportée sur le socle 104, dans une ouverture 56 de ce dernier, avec interposition d'un joint d'étanchéité 58. L'embase 54 comporte des pattes latérales de clipsage 60 et une collerette arrière de butée 62. L'embase est montée en étant introduite à force vers l'avant dans l'ouverture 56 du socle 104 jusqu'à faire passer les pattes de clipsage 60 à travers l'ouverture 56 et à mettre la collerette 62 en butée contre la paroi du socle 104 avec interposition du joint 58. Les pattes de clipsage 60 ont une facette arrière perpendiculaire à la direction d'introduction et venant en butée contre le socle 104 pour interdire le recul de l'embase hors de l'ouverture.

Le socle 104 et l'embase 54 présentent par ailleurs les mêmes caractéristiques que celles décrites dans le premier exemple pour le socle seul.

Dans le présent mode de réalisation, on dispose d'un ensemble comprenant des premiers socles 4 selon le premier exemple, des deuxièmes socles 104 selon le deuxième exemple, des embases 54 adaptées à être rapportées sur les deuxièmes socles 104 et des porte-contacts 14. Les conduits 18 des premiers socles 4 et les conduits 18 des deuxièmes socles 104 ont des configurations identiques de sorte qu'ils sont chacun adaptés à recevoir en position de réception le même porte-contacts 14. On peut donc fabriquer à volonté un projecteur selon le premier exemple ou le deuxième exemple au moyen des mêmes porte-contacts.

Le dispositif pourra être un feu de signalisation.

On pourra modifier le nombre et la forme des verrous et des contacts. On pourra faire varier la configuration du conduit et du porte-contacts.

## Revendications

1. Dispositif d'éclairage ou de signalisation (2) pour véhicule, comportant un porte-contacts (14) adapté à être connecté directement à un connecteur (20) du véhicule et présentant un conduit (18) adapté à recevoir le porte-contacts (14) en vue de sa connexion, **caractérisé en ce que** le porte-contacts (14) comporte un support (28), des contacts (12) adaptés à être reçus à une position de contact dans le support, et pour chaque contact (12) un verrou (30) adapté à avoir une position de verrouillage dans laquelle il interdit la sortie du contact (12) reçu en position de contact, chaque verrou étant articulé sur le support.

2. Dispositif selon la revendication 1, **caractérisé en ce qu'**il comporte un socle (4) définissant le conduit (18).

3. Dispositif selon la revendication 1, **caractérisé en ce qu'**il comporte un socle (104), et une embase (54) rapportée sur le socle et définissant le conduit (18).

4. Dispositif selon l'une quelconque des revendications 1 à 3, **caractérisé en ce que** le conduit (18) présente une longueur (1) supérieure à une épaisseur (e) du socle (4, 104) mesurée à distance du conduit.

5. Dispositif selon l'une quelconque des revendications 1 à 4, **caractérisé en ce que** le conduit (18) est adapté pour recevoir le porte-contacts (14) de façon ajustée.

6. Dispositif selon l'une quelconque des revendications 1 à 5, **caractérisé en ce que** le dispositif (2) comporte des moyens de butée (40, 42) pour limiter une avancée du porte-contacts (14) dans le conduit (18) jusqu'à une position de réception.

7. Dispositif selon l'une quelconque des revendications 1 à 6, **caractérisé en ce que** le dispositif (18) comporte des moyens de clipsage (42, 44) adaptés à interdire une sortie intempestive du porte-contacts (14) une fois celui-ci reçu dans le conduit (18).

8. Dispositif selon l'une quelconque des revendications 1 à 7, **caractérisé en ce que** le porte-contacts (14) présente une extrémité de connexion adaptée à coopérer avec le connecteur (20) du véhicule, le conduit (18) étant adapté à s'étendre au-delà de l'extrémité de connexion lorsque le porte-contacts (14) est reçu en position de réception.

9. Dispositif selon l'une quelconque des revendications 1 à 8, **caractérisé en ce que** chaque contact (12) et le verrou (30) associé sont configurés de sorte que le contact, dans toute position dans le support (28) autre que la position de contact, occupe l'emplacement du verrou (30) en position de verrouillage.

10. Dispositif selon l'une quelconque des revendications 1 à 9, **caractérisé en ce que** le conduit (18) est adapté à recevoir les verrous (30).

11. Ensemble pour l'assemblage d'un dispositif d'éclairage ou de signalisation (2) pour véhicule, l'ensemble comprenant un porte-contacts (14) adapté à être connecté directement à un connecteur (20) du véhicule, **caractérisé en ce qu'**il comprend un premier socle (4) définissant un premier conduit (18), un deuxième socle (104), et une embase (54) adaptée à être rapportée sur le deuxième socle (104) et définissant un deuxième conduit (18), les premier et deuxième conduits (18) étant chacun adaptés à recevoir le porte-contacts (14) en vue de sa connexion, le porte-contacts comportant un support (28), des contacts (12) adaptés à être reçus à une position de contact dans le support, et pour chaque contact (12) un verrou (30) adapté à avoir une position de verrouillage dans laquelle il interdit la sortie du contact (12) reçu en position de contact, chaque verrou étant articulé sur le support (28).

## Claims

1. Lighting or signalling device (2) for a vehicle, comprising a contact holder (14) adapted to be connected directly to a connector (20) of the vehicle and having a conduit (18) adapted to receive the contact holder (14) for its connection, **characterised in that** the contact holder (14) comprises a support (28), contacts (12) adapted to be received at a contact position in the support, and for each contact (12) a lock(30) adapted to have a locking position in which it prevents the contact (12) received in the contact position from emerging, each lock being articulated on the support.

2. Device according to claim 1, **characterised in that** it comprises a housing (4) defining the conduit (18).

3. Device according to claim 1, **characterised in that** it comprises a housing (104), and a base (54) attached to the housing and defining the conduit (18).

4. Device according to any one of claims 1 to 3, **characterised in that** the conduit (18) has a length (1) greater than a thickness (e) of the housing (4, 104) measured at a distance from the conduit.

5. Device according to any one of claims 1 to 4, **characterised in that** the conduit (18) is adapted to receive the contact holder (14) so as to fit.

6. Device according to any one of claims 1 to 5, **characterised in that** the device (2) comprises stop means (40, 42) for limiting a forward movement of the contact holder (14) in the conduit (18) as far as a reception position.

7. Device according to any one of claims 1 to 6, **characterised in that** the device (18) comprises snapping-in means (42, 44) adapted to prevent unwanted emerging of the contact holder (14) whilst the latter is received in the conduit (18).

8. Device according to any one of claims 1 to 7, **characterised in that** the contact holder (14) has a connection end adapted to cooperate with the connector (20) of the vehicle, the conduit (18) being adapted to extend beyond the connection end when the contact holder (14) is received in the reception position.

9. Device according to any one of claims 1 to 8, **characterised in that** each contact (12) and the associated lock(30) are configured so that the contact, in any position in the support (28) other than the contact position, occupies the location of the lock (30) in the locking position.

10. Device according to any one of claims 1 to 9, **characterised in that** the conduit (18) is adapted to receive the locks (30).

11. Assembly for assembling a lighting or signalling device (2) for a vehicle, the assembly comprising a contact holder (14) adapted to be connected directly to a connector (20) of the vehicle, **characterised in that** it comprises a first housing (4) defining a first conduit (18), a second housing (104), and a base (54) adapted to be attached to the second housing (104) and defining a second conduit (18), the first and second conduits (18) each being adapted to receive the contact holder (14) for its connection, the contact holder comprising a support (28), contacts (12) adapted to be received at a contact position in the support, and, for each contact (12), a lock(30) adapted to have a locking position in which it prevents the contact (12) received in the contact position from emerging, each lock being articulated on the support (28).

## Patentansprüche

1. Beleuchtungs- oder Signalgebungsvorrichtung (2) für Fahrzeuge, mit einem Kontaktträger (14), der unmittelbar an einen Steckverbinder (20) des Fahrzeugs angeschlossen zu werden vermag und einen Kanal (18) aufweist, der den Kontaktträger (14) zu dessen Anschluss aufzunehmen vermag,
**dadurch gekennzeichnet, dass** der Kontaktträger (14) einen Halter (28), Kontakte (12), die in dem Halter in einer Kontaktposition aufgenommen werden können, und für jeden Kontakt (12) einen Riegel (30) umfasst, der eine Verriegelungsposition einzunehmen vermag, in der er das Entfernen des in der Kontaktposition aufgenommenen Kontakts (12) verhindert, wobei jeder Riegel an dem Halter angelenkt ist.

2. Vorrichtung nach Anspruch 1,
**dadurch gekennzeichnet, dass** sie einen den Kanal (18) bildenden Sockel (4) umfasst.

3. Vorrichtung nach Anspruch 1,
**dadurch gekennzeichnet, dass** sie einen Sockel (104) und einen Grundkörper (54) umfasst, der auf den Sockel aufgesetzt ist und den Kanal (18) bildet.

4. Vorrichtung nach einem der Ansprüche 1 bis 3,
**dadurch gekennzeichnet, dass** der Kanal (18) eine Länge (l) aufweist, die größer als eine im Abstand von der Leitung gemessene Dicke (e) des Sockels (4, 104) ist.

5. Vorrichtung nach einem der Ansprüche 1 bis 4,
**dadurch gekennzeichnet, dass** der Kanal (18) zum passenden Aufnehmen des Kontaktträgers (14) ausgestaltet ist.

6. Vorrichtung nach einem der Ansprüche 1 bis 5,
**dadurch gekennzeichnet, dass** die Vorrichtung (2) Anschlagmittel (40, 42) umfasst, um einen Vorschub des Kontaktträgers (14) in dem Kanal (18) bis zu einer Aufnahmeposition zu begrenzen.

7. Vorrichtung nach einem der Ansprüche 1 bis 6,
**dadurch gekennzeichnet, dass** die Vorrichtung (18) Clip-Mittel (42, 44) umfasst, die ein unbeabsichtigtes Entfernen des Kontaktträgers (14) zu verhindern vermögen, wenn dieser in dem Kanal (18) aufgenommen ist.

8. Vorrichtung nach einem der Ansprüche 1 bis 7,
**dadurch gekennzeichnet, dass** der Kontaktträger (14) ein Anschlussende aufweist,
das mit dem Steckverbinder (20) des Fahrzeugs zusammenzuwirken vermag, wobei der Kanal (18) sich über das Anschlussende hinaus zu erstrecken vermag, wenn der Kontaktträger (14) in der Aufnahmeposition aufgenommen ist.

9. Vorrichtung nach einem der Ansprüche 1 bis 8,
**dadurch gekennzeichnet, dass** jeder Kontakt (12) und der zugehörige Riegel (30) derart ausgebildet sind, dass der Kontakt in jeder Position in dem Halter (28) außer der Kontaktposition die Stellung des Riegels (30) in der Verriegelungsstellung einnimmt.

10. Vorrichtung nach einem der Ansprüche 1 bis 9,
**dadurch gekennzeichnet, dass** der Kanal (18) die Riegel (30) aufzunehmen vermag.

11. Einheit zur Montage einer Beleuchtungs- oder Signalgebungsvorrichtung (2) für Fahrzeuge, wobei die Einheit einen Kontaktträger (14) umfasst, der unmittelbar an einen Steckverbinder (20) des Fahrzeugs angeschlossen zu werden vermag,
**dadurch gekennzeichnet, dass** sie einen ersten Sockel (4), der einen ersten Kanal (18) bildet, einen zweiten Sockel (104) und einen Grundkörper (54) umfasst, der auf den zweiten Sockel (104) aufgesetzt zu werden vermag und einen zweiten Kanal (18) bildet, wobei der erste und der zweite Kanal (18) beide jeweils den Kontaktträger (14) zu dessen Anschluss aufzunehmen vermögen, wobei der Kontaktträger einen Halter (28), Kontakte (12), die in dem Halter in einer Kontaktposition aufgenommen werden können, und für jeden Kontakt (12) einen Riegel (30) umfasst, der eine Verriegelungsposition einzunehmen vermag, in der er das Entfernen des in der Kontaktposition aufgenommenen Kontakts (12) verhindert, wobei jeder Riegel an dem Halter (28) angelenkt ist.
